# EUROPEAN PATENT APPLICATION

(11) **EP 3 075 683 A1**
(43) Date of publication of application: **05.10.2016**
(21) Application number: 16163136.1
(22) Date of filing: 31.03.2016
(51) Int. Cl.: B65G 27/00, B65G 27/30, B65G 27/22

(54) **CONVEYOR, STOPPING ARRANGEMENT FOR A CONVEYOR, METHOD FOR CONVEYING AND/OR SINGULARIZING BULK ITEMS, KIT AND METHOD FOR RETROFITTING CONVEYORS**

(30) Priority: 02.04.2015 EP 15162442
(71) Applicant: Bühler AG, 9240 Uzwil (CH)
(72) Inventor: Maggioni, Roberto, 20064 Gorgonzola (IT)
(74) Representative: Hepp Wenger Ryffel AG

(57) **Abstract**

Conveyor including a mass (1), preferably a conveyor trough, and a vibration generator (2), preferably a pneumatic piston/cylinder unit, one portion of which is connected directly or indirectly to the mass (1) and the other portion of which is preferably connectable to a countermass (3), preferably a foundation or a frame, to cause the mass (1) to vibrate, wherein the mass (1) is connected to the countermass (3) by at least one resilient connecting element (4) and at least one guiding element (5).

## Description

The invention relates to a conveyor according to the independent claims. The invention further relates to a method for conveying and/or using such a conveyor and the use of a conveyor for conveying and/or singularizing bulk items. A kit for retrofitting existing conveyors and a method for retrofitting existing conveyors with such a kit are also disclosed.

Conveyors are known in the art and used i.e. for conveying, partitioning and/or separating bulk material along a conveying direction. As an example, conveyors are used for the transport of bulk material in the food industry, such as pieces, granulates, powders, for example nuts and other fruits. The nuts are delivered as a bulk amount to a conveyor trough of appropriate shape which is caused to vibrate with defined process parameters such as amplitude, frequency and direction typical of the resonance of the system. In particular, due to the direction of the vibration and the arrangement of the conveyor trough, a momentum is transferred to the nuts and causes them to jump on the conveyor trough and to advance.

An example of such a resonance conveyor is known from the EP 0 794 136 B1. In a particular embodiment of the EP 0 794 136 B1, the conveyor trough is connected to a countermass by means of parallel arranged leaf springs arranged perpendicular to the desired conveying direction. A pneumatic vibratory drive is also connecting the conveyor trough and the countermass and allows the conveyor trough to vibrate in resonance.

Such a resonance conveyor is however hard to set because the resonance characteristics vary because of the non-identical nature of the conveyed bulk material.

US 2,868,357 discloses a vibrating means for a conveyor. A conveyor trough is carried on rocker arms arranged in parallel which are pivotally carried on shafts attached to a base. A vibrator is supported at is lower end on a lug fixed to the base. Attached to the upper end of the vibrator is a helical spring, the other end of the helical spring being fixed to the conveyor trough close to one of the rocker arms. The vibrator and the spring are in linear arrangement. Due to the parallel arrangement of the rocker arms and the linear arrangement of the spring and the vibrator the conveyor trough performs a reciprocating motion and causes bulk material to be conveyed in a manner which appears to be the flow of a fluid.

Similarly, US 2011 083944 discloses a balanced vibrating conveyor apparatus using a torsion bar spring and rocker arm for a conveyor trough. With the torsion bar spring at a rocker arm node point, dynamic forces are minimized in the conveyor frame, as well as the building support structure.

However, such conveyors are not appropriate for conveying, separating and single-dosing of bulk materials. In particular applications it is requested to convey the bulk material and to deliver single bulk items such as single nuts at a particular moment, e.g. when a receiving mould is passing below the conveyor trough. For doing this, the single bulk items are preferably spaced apart during conveying. Furthermore, the conveyor trough must be operated in a start-stop mode in order to allow only one single bulk item leave the conveyor at the desired moment.

Other problems of known conveyors are that, when a plurality of conveyor trough are arranged in parallel, the resonance vibration of one conveyor through or stopping one of the conveyor troughs can generate secondary vibrations of the other troughs which influence the conveying and/or dosing of the single bulk items.

A further known problem is that the conveyor trough is sometimes slidingly supported on sliding blocks which are subject to mechanical and abrasive wear, the abrasive wear being mainly generated by fine bulk material particles abraded during conveying. Such a material wear can lead to contamination of the bulk material and is clearly not desired, in particular in the food and pharmaceutical industry.

It is therefore aim of the present invention to provide a conveyor which solves the problems of the prior art and in particular allows conveying, separating and single-dosing of bulk items in a reliable and controllable way.

The problems are solved according to the independent claims of the present invention.

The problem is solved by connecting the conveyor trough to the countermass by means of different arrangements which allow the mass to swing in resonance but with different paths of movement, therefore creating a pitching movement of the conveyor trough. The pitching movement is not only advantageous for conveying the single bulk items but also imparts a different movement to the single bulk items the more they advance along the conveyor trough in order to increase the distance between adjacent single bulk items.

According to a first aspect of the invention, there is provided a conveyor including a mass, preferably a conveyor trough, and a vibration generator, preferably a pneumatic piston/cylinder unit. Alternatively, the vibration generator may be an electromechanical, mechanical or piezoelectric vibration generator.

One portion of the vibration generator is connected directly or indirectly to the mass. The other portion of the vibration generator is preferably connectable or connected to a countermass, preferably a foundation or a frame, to cause the mass to vibrate, preferably with a resonance frequency.

Preferably, with the vibration generator designed as a pneumatic piston/cylinder unit, the piston or cylinder is connected to the mass, wherein the cylinder or piston is connectable or connected to the countermass.

The vibration generator is preferably operated with a pressure, preferably of compressed air, between 1.5 and 3.5 bar. The vibration generator is preferably operated for generating a vibration with a frequency between 15 Hz and 35 Hz and an amplitude between 1 and 2 mm.

Further, at least one resilient connecting element and at least one guiding element are provided.

According to the present invention, the mass is connected to the countermass by the at least one resilient connecting element and the at least one guiding element.

Preferably the resilient connecting element is not linearly arranged with the guiding element, particularly the resilient connecting element and the guiding element are not directly connected.

Preferably the resilient connecting element and the vibration generator are each connected or connectable to the countermass independently.

The at least one resilient connecting element allows the system to swing and preferably to be operated in resonance as in known resonance conveyors.

The one guiding element is designed for enabling the mass to swing, preferably in resonance, and can also feature a different degree of freedom compared to the resilient connecting element and/or being adapted to impart a second movement in a second direction different from the first movement generated by the vibration generator and resilient connecting means arrangement, i.e. for spacing apart the single bulk items during conveying. Furthermore, when stopping the mass, the guiding element does not lead to a significant post-pulse oscillation of the mass which may lead to uncontrolled conveying and/or dosing of single bulk items.

The guiding element is preferably not resilient. Although every rigid body is *per se* resilient, within the meaning of the present invention, "not resilient" means that the guiding means has a resonance frequency which is substantially different from the resonance frequency of the vibrating mass and resilient connecting element. The guiding element is therefore not influencing the resonance characteristics of the remaining arrangement.

The mass is preferably detachably connected to the countermass, meaning that the mass may be easily detached for exchange, maintenance or cleaning purposes.

It is clear from the above that also existing conveyors can be upgraded according to the present invention.

The at least one resilient connecting element and the at least one guiding element are preferably arranged in parallel, meaning that each of the resilient connecting element and guiding element is connected with the mass and the countermass. A serial arrangement is also possible.

Preferably, with regard to a conveying direction, the at least one guiding element is arranged downstream of the at least one resilient connecting element.

In a preferred embodiment, the mass and the countermass are connected by one resilient connecting element and one guiding element respectively.

Resonance is only determined by one resilient connecting element (and the mass) and therefore, for setting the desired resonance only the resonance characteristics of the one resilient connecting element and of the mass have to be considered. The modulus of resilience is preferably adapted to create a vibration with a frequency that allows singularization of single bulk items when conveyed. The connection of the mass with the countermass by means of one resilient connecting element is further particularly advantageous when stopping the mass, since the resilient connecting element is critical with regard to the generation of post-pulse oscillations. By reducing the number of resilient connecting elements, the stopping of the mass can be increased without the need for complicated stopping systems which are also expensive.

Preferably, the resilient connecting element includes at least one leaf spring.

A leaf spring is particularly preferred since it allows swinging of the mass in one defined direction but at the same time can be used to support the mass, depending on the thickness, length, material etc. Furthermore leaf springs are quite cheap compared to other spring types.

Alternatively, other spring types may be used, provided that they allow swinging of the mass in one defined direction or with a predetermined movement path, for example a resilient connecting element formed by an elastomer.

More preferred a plurality of leaf springs are arranged and coupled parallel to each other.

In this particular embodiment, the connection between the mass and the countermass can be made by an arrangement comprising two or more leaf springs which are interconnected by elements which can also provide fastening means for the mass and/or the countermass. The modulus of the resilient connecting element can be therefore adjusted by changing the number, length and stiffness of the leaf springs of the arrangement.

It is clear from the above that the leaf springs must not necessarily be flat-shaped and straight. Arrangements with curved leaf springs are also possible depending on the application. It is however important that the leaf springs are arranged such that the swinging direction is basically the same for all the leaf springs of one arrangement.

In particular, the resilient connecting means, preferably the at least one leaf spring, is interconnected at a first end by a first fastening block for rigidly fastening the resilient connecting element to the countermass and/or at a second end by a second fastening block for rigidly fastening the resilient connecting element to the mass.

Preferably a plurality of leaf springs is interconnected at a first end by a first fastening block and/or at a second end by a second fastening block.

Such a preferred embodiment is advantageous when the first and/or second fastening block are provided with fastening means and/or can accommodate fastening means for rigidly connecting the mass and the countermass respectively. For cleaning and/or maintenance purposes of the mass, e.g. when the latter is designed as a conveyor trough, the second fastening block has preferably quick fastening means such as snap-on means or the like for quickly fastening and removing the mass.

In a preferred variant of the present invention, the at least one resilient connecting element, preferably the at least one leaf spring, is arranged inclined with respect to a gravity vector.

An inclined arrangement of the at least one resilient connecting element, preferably of the at least one leaf spring, causes the mass to vibrate in a direction with a vector component along the gravity vector and another component perpendicular to the gravity vector. This allows, together with an accordingly designed mass, e.g. a conveyor trough, to impart a movement to the bulk material, e.g a hopping movement, which is preferred when conveying bulk material.

In particular the at least one resilient connecting element, preferably the at least one spring leaf, is inclined in a range between 0° and 30°, preferably 5° and 25°, more preferably between 10° and 20° and particularly preferred between 13° and 17°.

In the case of a resilient connecting element the inclination is defined as the inclination of a connecting line between the two attachment points of the resilient connecting element to the mass and the countermass respectively with respect to the gravity vector. In case this shaping is not possible, the inclination should be measured as the inclination perpendicular to a direction of vibration at the attachment point of the mass with the resilient connecting element.

The vibration generator is preferably arranged such as to provide a vibration in a direction substantially perpendicular to the at least one leaf spring.

This preferred arrangement allows the vibration generator to best transmit the generated movement to the mass.

Preferably, the vibration generator is connected indirectly to the mass, in particular by way of the second fastening block.

It is been found out that the indirect connection of the mass, in particular of the fastening block, to the vibration generator allows the best transmission of the movement generated by the vibration generator without losses due to counter-swinging of the resilient connecting element and/or damping of the generated movement due to the resilient nature of the resilient connecting element.

The at least one guiding element is preferably designed as a parallelogram-type joint, in particular including two fastening blocks for fastening the parallelogram-type joint to the countermass and to the mass and parallel arranged rigid coupling elements hinged to the two fastening blocks.
With this advantageous arrangement, the mass is free to vibrate. Furthermore, the guiding element is not influencing the swinging characteristic and preferably the resonance characteristics of the mass and/or of the resilient connecting element. A parallelogram-type joint allows a movement of the fastening blocks parallel to each other. A fastening point for the mass arranged in or on the respective fastening block thus follows a circular path with a known radius. The momentum imparted to the bulk material due to the guiding element can therefore be different from the momentum imparted by the resilient connecting element. It is therefore possible to design a mass where, depending on the location along/onto the mass, a movement imparted to a bulk material present thereon may be changed in a gradient-like manner. In particular with a mass designed as a conveyor trough it is possible to continuously change the movement imparted to the bulk material along a conveying direction, thus allowing as an example to first align the single bulk items and, as the bulks items are conveyed along the conveyor trough, to impart them a movement such that they are spaced apart.

Additionally the guiding means and the resilient means may be arranged essentially as a parallelogram-type joint, for example with leaf springs and rigid coupling elements arranged in parallel or almost parallel.

As an alternative, the guiding element can be a designed e.g. as a sliding guide, guiding rail etc. Another possibility is to design the guiding means as a sliding block, wherein the mass is only resting onto the sliding block and can freely vibrate. Means for avoiding lateral slipping of the mass and/or coming off the sliding block are preferably also provided.

Preferably, the mass is connectable to the fastening block of the guiding element by means of a ball joint.

When a parallelogram-type joint is used, the direction of the vibration movement at the resilient connecting element, which is essentialy linear, may lead to an undesired and dangerous tension at the attaching point for the mass located in or onto the fastening block. Since a rigid fastening of the mass to the fastening block of the resilient connecting element is preferred, the fastening of the mass to the fastening block of the guiding elements is done by way of a ball joint. In particular, the ball joint is designed such that it allows a quick fastening and release of the mass.

In a preferred embodiment, the connective joint between the mass and the fastening block comprises at least one magnet, preferably the magnet generating a force which holds the ball of a ball joint and a respective socket in place.

The guiding element, preferably the coupling elements of the parallelogram-type joint, is/are preferably arranged inclined with respect to a gravity vector, in particular in a range between 0° and 40°, preferably 10° and 30°, more preferably between 15° and 25°, particularly preferred between 18° and 22°.

With an inclined arrangement, comparable with the resilient connection element, the movement of the mass comprises a vector component along the gravity vector and another component perpendicular to the gravity vector. This allows, together with an accordingly designed mass, e.g. a conveyor trough, to impart a movement to the bulk material, e.g a hopping movement, which is preferred when conveying bulk material. Furthermore, the hopping movement may be changed in a gradient-like manner such that the single bulk items are spaced apart when conveyed.

As for the resilient connecting element, the inclination is defined, in the case where the guiding element is not designed as a parallelogram-type joint, as the inclination of a connecting line between the two attachment points of the guiding element to the mass and the countermass respectively with respect the gravity vector. In case this shaping is not possible, the inclination should be measured as the inclination perpendicular to a direction of vibration at the attachment point of the mass with the guiding element.

Preferably, the mass is a conveyor trough with a conveying direction arranged inclined with respect to a gravity vector (G), in particular in a range between 89° and 83°, more preferred between 87° and 85°.

The conveyor trough defines a conveying direction due to its design. The inclination of the conveyor trough is preferably such that the conveying direction is descending. Gravity can therefore be used to support the conveying.

Preferably, the inclination of the at least one resilient connecting element, preferably of the at least one leaf spring, is less than the inclination of the at least one guiding element, preferably the coupling elements. More preferred the vibration conveyor has in conveying direction a leaf spring arrangement comprising at least one leaf spring and a parallelogram-type joint. With such a preferred arrangement, the vibration of the leaf spring arrangement imposes a momentum to the bulk material which leads to a hopping of the bulk material with a ballistic trajectory. Due to the arrangement of the parallelogram-type joint and its typical movement downstream of the lead spring arrangement, the conveyor trough moves with a pitch-like pattern. This pitch-like pattern is similar to the movement of a boat on waves. The pitch-like pattern causes the launch angle of the ballistic trajectory to increase along the length of the conveyor trough, leading to a hopping movement with increasing maximal height. This increasing maximal height leads to an increase of the time during which the single bulk item is not touching the conveyor trough. Since the conveyor trough is also moving horizontally, the single bulk item fall down and contact the conveyor trough after a longer horizontal movement of the conveyor trough compared to an upstream position. This effect is used to space apart the single bulk items while those are conveyed along the conveyor trough.

The invention further solves the problem with a stopping arrangement as described thereafter. Preferably, the conveyor is a conveyor as described above. It is however possible to retrofit existing conveyors with a stopping arrangement according to the present invention.

In a preferred embodiment a mass, preferably a conveyor trough, is connected to a countermass over a resilient connecting element. The mass can be caused to vibrate by a vibration generator. A stopping arrangement is arranged at the countermass. The stopping arrangement is designed for changing the modulus of resilience of a related resilient connecting element and/or for impeding the movement of the related resilient connecting element and thus for stopping the conveyor.

Alternatively, the stopping arrangement may be arranged at the resilient connecting element.

By changing the resilience of the resilient connecting element, up to an infinite modulus, the resilient connecting element becomes stiffer and thus the vibration generated by the vibration generator would not cause resonance-swinging of the mass. Preferably, when the stopping arrangement is triggered, the vibration generator is also stopped.

According to the number of resilient connecting elements of the conveyor, a plurality of stopping arrangements may be preferably positioned in order to stop the related resilient connecting element.

The stopping arrangement preferably comprises an actuator with a stopper movably arranged between a first position and a second position, wherein in the second position the stopper contacts the resilient connecting element, in particular the at least one leaf spring. The actuator is preferably a pneumatic actuator. Alternatives are electromechanical and mechanical actuators.

In this preferred embodiment the movable stopper can be triggered to move and contact the resilient connecting element. In particular the movable stopper will contact a leaf spring in the second position, thus changing the swinging characteristics of the system. This leads to a fast stopping of the mass. Due to the fact that the stopper is acting on the leaf spring and not directly on the mass, the leaf spring also absorbs at least part of the swinging energy of the mass such that no vibrations are propagated to neighbouring structures such as a frame or a parallel arranged mass.

Preferably the stopper is not contacting the resilient connecting element when the mass is vibrating and the stopper is not in the second position.

In a preferred embodiment the stopper, when in the second position, constrains the resilient connecting element and/or the mass to rest against a limiting surface.

The stopper is therefore designed not only to contact the resilient connecting element but also to move it to a position, preferably a position which is outside the range of positions reached during vibration. When moving the resilient connecting element, depending on how the conveyor is designed, the resilient connecting element or the mass are pushed against a limiting surface, thus increasing the stopping speed. The limiting surface and/or the corresponding contact surface of the conveyor may be provided with a damping material in order to further increase stopping and/or avoid vibration propagation.

In a further preferred embodiment a break arrangement stops the conveyor, in particular the resilient connecting element and/or the vibration generator, in a phase of the vibration in such a way that, when restarted, the conveyor performs a conveying movement in the designated conveying direction.

This is particularly preferred when the conveyor is operated in a start-stop mode for dosing single bulk items. It can therefore be assured that upon stopping the conveyor, the conveyor performs a conveying movement and not a movement mainly opposite to the conveying direction.

In the operating state both the vibration generator and the resilient connecting means perform reciprocating movements in and against the designated conveying direction. The break arrangement provides for a defined interruption of the movement, such that the vibration generator and/or the resilient connecting means perform a movements in the designated conveying direction when operating is restarted.

In particular when the stopper constrains the resilient connecting element, in particular a leaf spring, and/or the mass to rest against a limiting surface, the constraining occurs such that the leaf spring is contacted by the stopper and displaced such that the mass or the fastening block are forced to rest against a limiting surface. The stopper also causes the leaf spring to become biased such that, when the stopper leaves the second position and the mass is made free to vibrate again, the mass is accelerated in a direction which causes the single bulk items to advance along the conveying direction. This particular arrangement has not only the advantage that the dosing of the single bulk items may be well controlled by the first movement after a stop being a conveying movement. Biasing the mass also allows the vibration generator, which, as cited above, is preferably shut down during stopping of the conveyor, to rapidly reach the desired vibration frequency and/or amplitude necessary for the resonance of the mass.

If the stopping arrangement is arranged at the resilient connecting element and/or the mass, the operating mode would be contrary to the above, with the stopping arrangement being designed for changing the modulus of resilience of the resilient connecting element and/or for impeding the movement of the related resilient connecting element and/or the mass and thus for stopping the conveyor by acting on the countermass.

Alternatively or additionally the vibrating means may be stopped in a position such that the first movement after restart is a movement in conveying direction.

In a preferred embodiment of the invention the conveyor comprises a control unit and/or regulating unit for affecting parameters of the vibrating means and/or the resilient connection means.

In particular, the vibrating generator comprises a pneumatic cylinder wherein the pressure is adjustable. By means of the control and/or regulating unit the pressure may be set to choose a certain vibration frequency and/or vibration amplitude. Alternatively or additionally the phase, that is the starting point of the vibration with respect to a conveying cycle may be adjusted.

In particular, by means of the control and/regulating unit the maximum amplitude and the module of resilience of the resilient connecting member may be set.

The parameters may be affected on demand or may be affected automatically, for example by choosing predetermined parameter values dependent on a measured signal.

The problems are also solved by a method for conveying, partitioning and/or singularizing bulk items using a conveyor as described in this application.

The use of a conveyor as described in this application for conveying and/or singularizing bulk items is also subject of the present application.

Preferably, the bulk items are food pieces such as dried fruits, nuts, candies, sweeties etc. Further preferred, the bulk items are conveyed, partitioned and/or singularized prior to being single dosed in another food composition e.g. as a filling in pralines, truffles, biscuits etc..

Advantages of the conveyor as described in this application are therefore also valid for a method and an use according to the present invention.

The invention further relates to a kit for retrofitting an existing conveyor. The existing conveyor normally comprises a mass, a countermass and at least one resilient connecting element connecting the mass to the countermass. The kit comprises at least one guiding element according to the present invention and means for connecting the mass and the countermass to the at least one guiding element. Depending on the purpose, means for connecting the mass to the at least one resilient means, e.g. for allowing fast attachment and detachment of the mass, may be included. Furthermore, a vibration generator may also be included in the kit together with means for connecting the vibration generator to the mass and the countermass.

For retrofitting an existing conveyor with a kit according the present invention, the mass has to be connected with the countermass over the at least one guiding element of the kit.

Preferably, a conveyor as described in the present application is obtainable by retrofitting an existing conveyor with a kit according to the present invention.

The problems are also solved by a production line for manufacturing food products comprising at least one conveyor as described above, in particular a plurality of conveyors, preferably with conveyor troughs arranged in parallel.

In particular the production line comprises a control and/or regulation unit for adapting the conveyor, preferably for synchronizing a plurality of conveyors, such that parameters of a respective vibration generator and/or of a respective resilient member are adjustable.

A plurality of conveyor is for example used for parallel manufacturing a number of food products, for example for filling bulk food into molds or for dosing a certain quantity of bulk food on half products.

Generally a number of molds or half produces is provided by a transport means, such as a conveyor belt, and a corresponding number of conveyors supplies bulk material. As soon as an appropriate quantum of bulk material has been delivered to all molds or half products, a new series of molds or half products will be provided to be supplied.

Parameters of the vibration generators and/or of the resilient members should comply with the velocity of the transport means.

Furthermore, to guarantee a smooth procedure, all conveyors should discharge their load at the same time and/or with the same rate.

However, sometimes it may be difficult to provide a series of conveyors being arranged such they work precisely analogue.

Due to minor deviations of the inclination or of the friction with respect to the bulk food, there may arise differences in the discharge times or discharge rates.

In case a difference is discovered, the parameters of a respective vibration generator and/or of a respective resilient member may be adapted to synchronise the conveyors with respect to each other and/or with respect to the transport means of the molds or half products.

The invention will be described above in a particular embodiment together with the drawings. It is shown in
- Figure 1: a side view of a conveyor according to the present invention,
- Figure 2: a sectional view of the spring leaf arrangement of figure 1,
- Figure 3: a sectional view of the parallelogram-type joint of figure 1,
- Figure 4: a detail of the stopping arrangement of figure 2, and
- Figure 5: a sectional view of another embodiment of the spring leaf arrangement;
- Figure 6: a schematical topview of a production line.

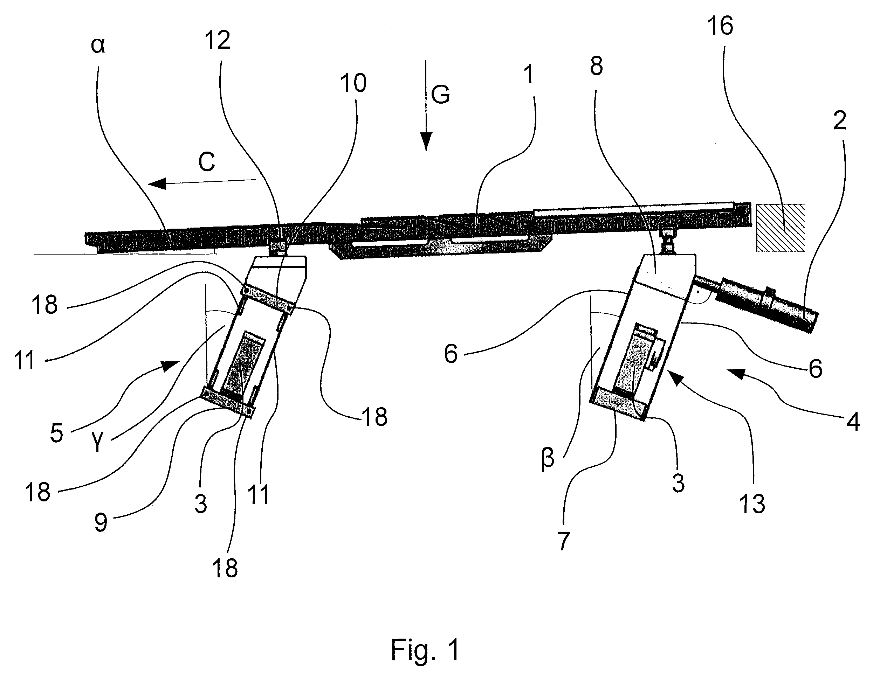

In figure 1 a conveyor is shown schematically. A conveyor trough 1 is arranged with an inclination angle α with regard to a horizontal and is connected to a frame 3 by means of a resilient connecting element, for example a leaf spring arrangement 4, and a guiding element, for example a parallelogram-type joint 5.

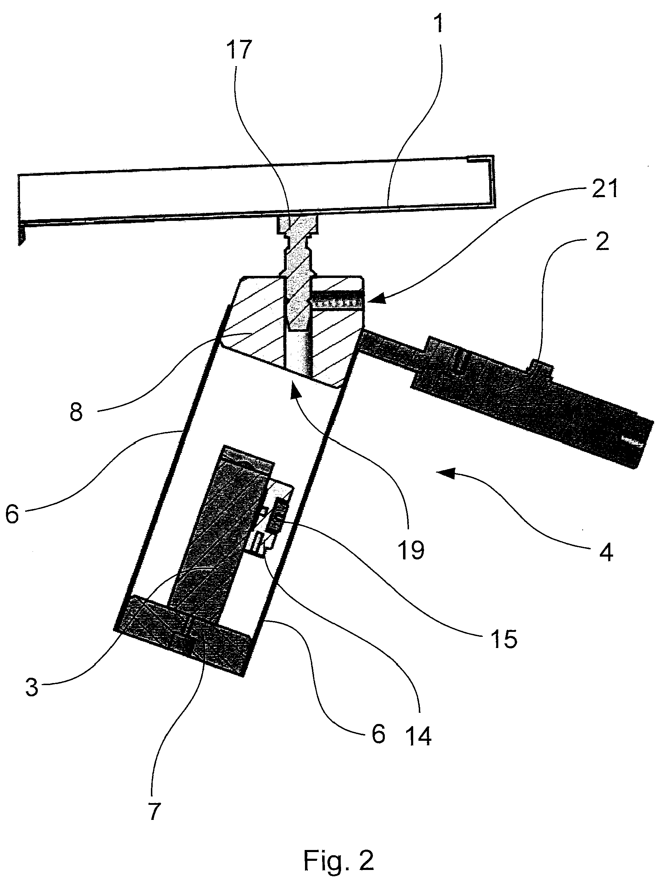

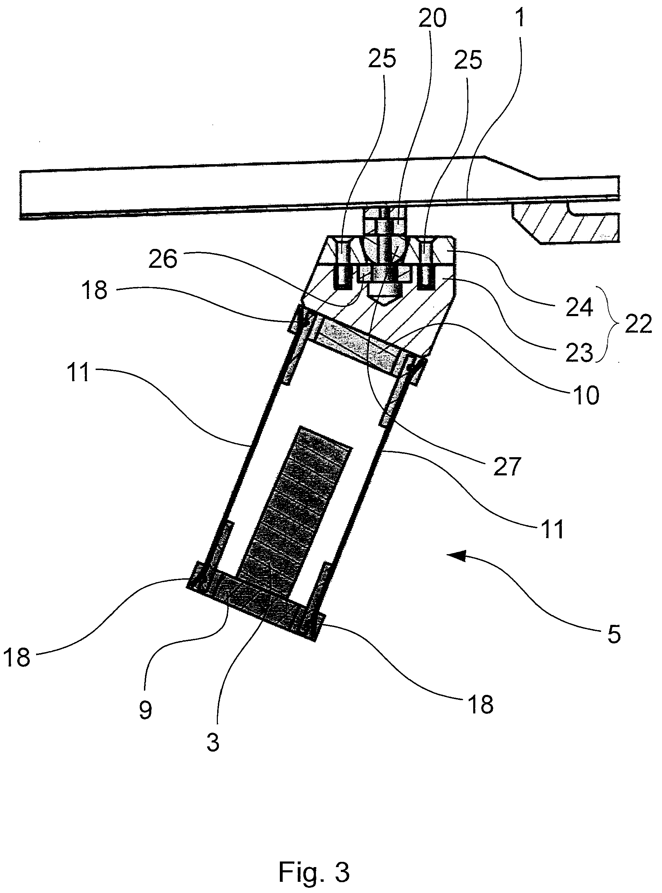

With regard to the leaf spring arrangement 4 reference for details is made to figure 2, while for the parallelogram-type joint 5, reference is made to figure 3.

A vibration generator 2, for example a pneumatic piston/cylinder unit, is attached to the leaf spring arrangement 4 and is controlled during operation to generate a vibration. Amplitude and frequency of the vibration produced by the vibration generator 2 and the modulus of resilience of the leaf springs arrangement 4 are chosen such that the whole conveyor trough 1 comes into a vibration status specific for the single bulk items to be conveyed.

The conveyor in figure 1 is shown in a static condition, wherein the vibration generator 2 is not operated.

The leaf spring arrangement 4 may consists mainly of two leaf springs 6 arranged parallel to each other which are connected to a lower and upper block 7 and 8 respectively. The lower block 7 may be firmly attached to the frame 3. The leaf springs 6 may be arranged with an angle β with regard to a vertical (which is parallel to a gravity vector G). The vibration generator 2 may be arranged perpendicular to the leaf springs 6 (the stroke direction generated by the vibration generator 2 being therefore perpendicular to the leaf spring 6).

A parallelogram-type joint 5 may consist mainly of one lower block 9 and an upper block 10 interconnected by two rigid coupling plates 11 and may be arranged downstream of the leaf spring arrangement 4 with respect to a conveying direction C of the conveyor trough 1.

As for the leaf spring arrangement 4, also in the parallelogram-type joint 5 the lower block 9 may be firmly connected to the frame 3. In an upper region, the plates 11 may be interconnected by means of an upper block 10. The plates 11 may be hinged to the lower block 9 and upper block 10 by means of pin-joints 18. The plates 11 may be arranged parallel to each other and with an angle γ with respect to a vertical. The angle γ may be chosen greater than the angle β.

The attachment points of the frame 3 and conveyor trough 1 with the lower and upper blocks 7, 9 and 8, 10 respectively may be designed such that the correct angle is guaranteed upon installation.

As better shown in figure 2, the conveyor trough 1 may be connected to the upper block 8 of the leaf spring arrangement 4 by insertion of a specially designed pin 17 in a hole 19 of the block 8. The pin 19 of the conveyor trough 1 may have a circular notch which, upon inserting of the pin into the hole 19, is engaged by a biased element (not shown) movably located in the opening 21 which prevents the conveyor trough 1 from being pushed out during operation.

Since the conveyor trough 1 may be connected to the frame 3 by two different designed elements, namely the leaf spring arrangement 4 and the parallelogram-type joint 5 with different freedom of movement, the conveyor trough 1 may be connected to the upper block 10 of the parallelogram-type joint 5 by means of a ball joint 12 in order to reduce stress during operation resulting from the pitching movement of the conveyor trough 1.

In the figure 3 the parallelogram-type joint 5 is shown in more detail. As already cited with regard to figure 1, the plates 11 may be hinged to the lower block 9 and upper block 10 by means of pin joints 18. The upper block 10 may also comprise a ball joint socket 22 consisting of a socket base 23 and a cover 24. The socket base 23 and the cover 24 may be attached by means of two screws 25 and enclose an annular magnet 26. The annular magnet 26 may be arranged in proximity of a receiving opening for the ball 27 of the ball joint 12. The receiving opening may have a truncated cone shape and be made of a material with a lower friction coefficient.

The part of the ball joint 12 attached to the conveyor trough 1 may also comprise another magnet 20 arranged near the ball 27 of the ball joint 12 and oriented such that it is attracted by the annular magnet 26. The magnetic force exerted by the annular magnet 26 on other magnet 20 may be high enough to keep the ball joint 12 in place during operation.

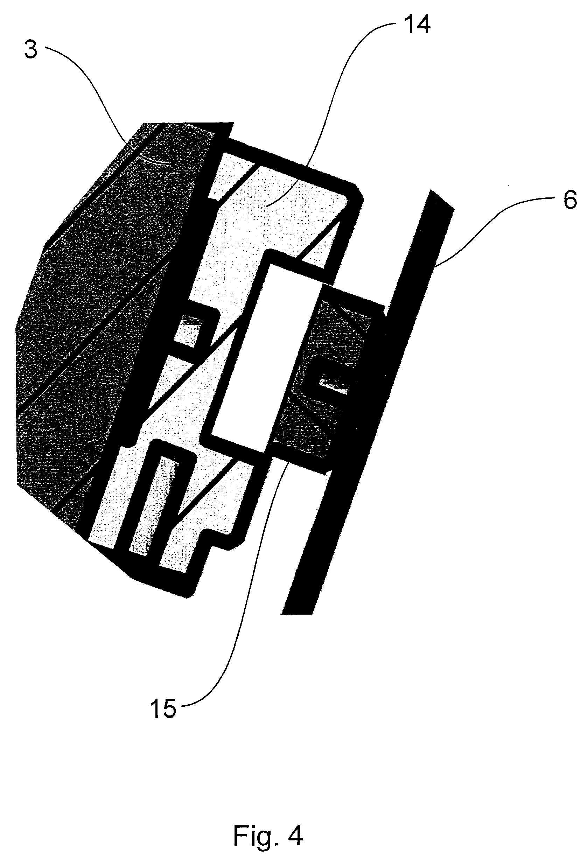

Figure 2 shows the stopping arrangement 13 schematically shown in figure 1 in more detail. The stopping arrangement 13 may comprise a pneumatic actuator 14 attached to the frame 3. The pneumatic actuator 14 may also include a movable element 15 which is pneumatically movable between a first position and a second position. In figure 2 the movable element 15 is shown in the first position, while in figure 4 the movable element is shown in the second position contacting the leaf spring 6.

If during operation of the conveyor the conveyor trough 1 has to be stopped, the vibration generator 2 is first stopped. Due to the inertance of the system and to the connection of the conveyor trough 1 to the frame 3 by the leaf spring arrangement 4 and the parallelogram-type joint 5, the conveyor trough 1 may continue to swing with decreasing frequency and amplitude after stopping of the vibration generator 2 before coming to a standstill.

In order to accelerate stopping of the conveyor trough 1, the pneumatic actuator 14 may also be activated and the movable element 15 moved from the first position to the second position contacting the leaf spring 6. The moving element 15 may contact the leaf spring 6 and help stopping the vibration of the leaf spring arrangement 4. Furthermore, the leaf spring 6 may be pushed away from the frame 3 and a portion of the conveyor trough 1 caused to rest against a surface 16 of the frame 3, thus quickly bringing the conveyor trough 1 to a standstill. Biasing of the leaf spring 6 may also have the advantage that, when movement is resumed, the biasing force of the leaf spring 6 helps to quickly accelerate the conveyor trough 1.

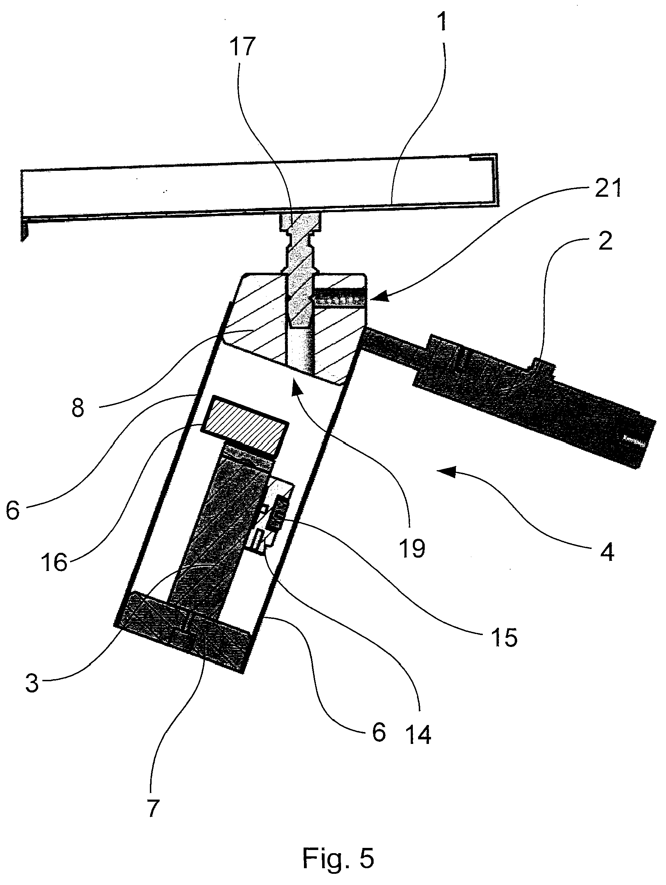

In figure 5, an alternative arrangement of the stopping surface 16 is shown. The stopping surface 16 is arranged such that the leaf spring 6 may contact the stopping surface 16 when the movable element 15 is activated and the leaf spring is pushed away from the frame 3.

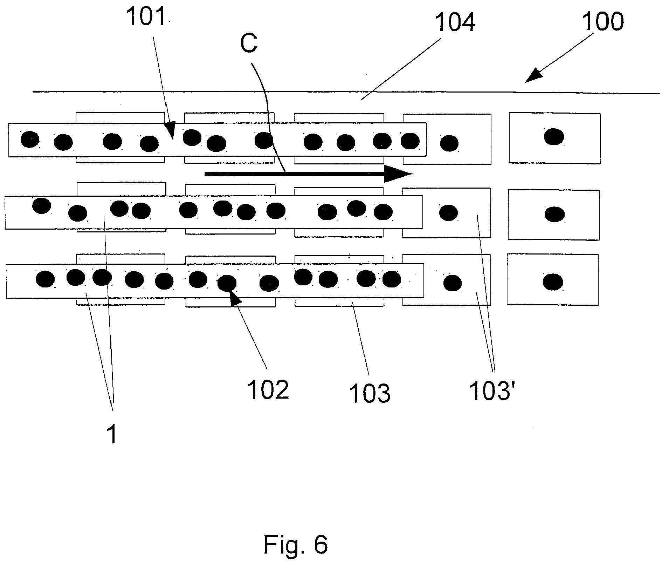

Figure 6 shows a schematical top view of production line 100 for manufacturing food products, comprising three conveyors 101 with conveyor troughs 1 arranged in parallel.
Food pieces 102, such as nuts are transported along the conveyor troughs 1 in conveying direction C.

When the food pieces 102 reach the end of the conveyor troughs 1 they fall in a mold 103, which is moved by a transport means 104, for example a conveyor belt. Molds 103' which are already filled leave the place of delivery and empty molds 103 will take the place.

The production line 100 comprises a control and/or regulation unit not explicitly shown in the figure for synchronizing the conveyors 101 and for setting the parameters of the vibration generators 2 and/or the resilient connecting elements 4, such that the food pieces are delivered in the same time window for all molds 103 having arrived at the place of delivery.

## Claims

1. Conveyor for conveying, partitioning and/or singularizing bulk items, preferably food pieces such as dried fruits, nuts and candies, including:
- a mass (1), preferably a conveyor trough,
- a vibration generator (2), preferably a pneumatic piston/cylinder unit, one portion of which is connected directly or indirectly to the mass (1) and the other portion of which is preferably connectable to a countermass (3), preferably a foundation or a frame, to cause the mass (1) to vibrate,
- at least one resilient connecting element (4), and
- at least one guiding means (5),
wherein the mass (1) is connected, preferably detachably connected, to the countermass (3) by the at least one resilient connecting element (4) and at the least one guiding element (5).

2. Conveyor according to claim 1, wherein the resilient connecting element (4) includes at least one leaf spring (6), preferably a plurality of leaf springs arranged parallel to each other.

3. Conveyor according to claim 1 or 2, wherein the resilient connecting element (4), in particular at least one leaf spring (6), is interconnected at a first end by a first fastening block (7) for rigidly fastening the resilient connecting element (4) to the countermass (3) and/or at a second end by a second fastening block (8) for rigidly fastening the resilient connecting element (4) to the mass (1).

4. Conveyor according to one of the claims 1 to 4, wherein the at least one resilient connecting element (4), preferably the at least one leaf spring (6), is arranged inclined with respect to a gravity vector (G) by a first angle (β), in particular in a range between 0° and 30°, preferably 5° and 25°, more preferably between 10° and 20° and particularly preferred between 13° and 17°
and/or
wherein the at least one guiding means, in particular a coupling element (11), is arranged inclined with respect to a gravity vector (G) by a second angle (γ), in particular in a range between 10° and 30°, more preferably between 15° and 25°, particularly preferred between 18° and 22°,
wherein in particular the first angle (β) is smaller than the second angle (γ).

5. Conveyor according to one of the claims 1 to 4, wherein the vibration generator (2) is arranged such as to provide a vibration in a direction substantially perpendicular to the at least one resilient connecting element (4), preferably to the leaf spring (6).

6. Conveyor according to one of the claims 1 to 5, wherein the vibration generator (2) is connected indirectly to the mass (1), in particular by means of a second fastening block (8).

7. Conveyor according to one of the preceding claims, wherein the at least one guiding element (5) is designed as a parallelogram-type joint, in particular including two fastening blocks (9, 10) for fastening the parallelogram-type joint to the countermass (3) and to the mass (1) and parallel arranged coupling elements (11) hinged to the two fastening blocks (9, 10).

8. Conveyor according to claim 7, wherein the mass is connectable to the fastening block (10) of the guiding element (5) by means of a ball joint (12).

9. Conveyor, in particular according to one of the preceding claims, wherein the mass (1) is connected to the countermass (3) by means of at least one resilient connecting element (4) and the mass (1) is caused to vibrate by means of a vibration generator (2), wherein at least one stopping arrangement (13) is arranged at a countermass (3) for changing the modulus of resilience (D) of the related resilient connecting element (4) and/or for impeding the movement of the related resilient connecting element (4) and thus for stopping the conveyor.

10. Conveyor according to claim 9, wherein the stopping arrangement (13) comprises an actuator, preferably a pneumatic actuator (14), with a stopper (15) movably arranged between a first position and a second position, wherein in the second position the stopper (15) contacts the resilient connecting element (4), in particular at least one leaf spring (6) of the resilient connecting element (4).

11. Conveyor according to claim 10, wherein in the second position the stopper (15) constrains the resilient connecting element (4) and/or the mass (1) to rest against a limiting surface (16).

12. Conveyor according to one of the claims 9 to 11, wherein the stopping arrangement (13) stops the conveyor in a phase of the vibration in such a way that, when restarted, the conveyor performs a conveying movement.

13. Method for conveying, partitioning and/or singularizing bulk items, preferably food pieces such as dried fruits, nuts and candies, using a conveyor according to one of the claims 1 to 12.

14. Use of a conveyor according to one of the claims 1 to 12 for conveying, partitioning and/or singularizing bulk items, preferably food pieces such as dried fruits, nuts and candies.

15. Kit for retrofitting a conveyor, the conveyor comprising a mass (1), a countermass (3) and optionally a vibration generator (2) and at least one resilient connecting element (4), the kit comprising at least one guiding element (5) and means for detachably connecting the mass (1) to the at least one guiding element (5), optionally a vibration generator (2) and means for connecting the vibration generator (2) to the mass (1) and optionally the countermass (3) and optionally at least one resilient connecting means (4) and means for connecting the at least one resilient connecting means (4) to the mass (1) and the countermass (3).

16. Method for retrofitting a conveyor with a kit according to claim 15, including the steps of:
- connecting the mass (1) with the countermass (3) over the at least one guiding element (5).

17. Production line for manufacturing food products comprising at least one conveyor (101) according to one of claims 1-12, in particular a plurality of conveyors (101), preferably with conveyor troughs (1) arranged in parallel.

18. Production line according to claim 17, **characterized in that** the production line (100) comprises a control and/or regulation unit for adapting the conveyor (101), preferably for synchronizing a plurality of conveyors (1), such that parameters of a respective vibration generator (2) and/or of a respective resilient connecting element (4) are adjustable.
